Europäisches Patentamt

European Patent Office

Office européen des brevets

(19)

(11) **EP 0 782 288 B1**

(12) **EUROPEAN PATENT SPECIFICATION**

(45) Date of publication and mention
of the grant of the patent:
**27.07.2005 Bulletin 2005/30**

(51) Int Cl.⁷: **H04J 13/00**

(21) Application number: **96120802.2**

(22) Date of filing: **23.12.1996**

(54) **Spread spectrum communication system**

Spreizspektrumnachrichtenübertragungssystem

Système de communication à spectre étalé

(84) Designated Contracting States:
**DE FR GB**

(30) Priority: **26.12.1995 JP 35141595**
**23.01.1996 JP 2846796**
**12.04.1996 JP 11443196**

(43) Date of publication of application:
**02.07.1997 Bulletin 1997/27**

(73) Proprietor: **SHARP KABUSHIKI KAISHA**
**Osaka-shi, Osaka-fu 545-0013 (JP)**

(72) Inventors:
• **Shou, Guoliang c/o Yozan Inc.**
**Setagaya-ku, Tokyo 155 (JP)**
• **Zhou, Changming c/o Yozan Inc.**
**Setagaya-ku, Tokyo 155 (JP)**
• **Zhou, Xuping c/o Yozan Inc.**
**Setagaya-ku, Tokyo 155 (JP)**
• **Yamamoto, Makoto c/o Yozan Inc.**
**Setagaya-ku, Tokyo 155 (JP)**

• **Takatori, Sunao c/o Yozan Inc.**
**Setagaya-ku, Tokyo 155 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 700 170       US-A- 5 063 571**

• **SHIGENOBU SASAKI ET AL: "PERFORMANCE**
**OF DIFFERENTIAL PARALLEL COMBINATORY**
**SPREAD SPECTRUM COMMUNICATION**
**SYSTEMS" ELECTRONICS &**
**COMMUNICATIONS IN JAPAN, PART I -**
**COMMUNICATIONS,US,SCRIPTA TECHNICA.**
**NEW YORK, vol. 78, no. 10, 1 October 1995**
**(1995-10-01), pages 73-84, XP000546400 ISSN:**
**8756-6621**

**Description**

FIELD OF THE INVENTION

The present invention relates to a spread spectrum communication system.

BACKGROUND OF THE INVENTION

A spread spectrum communication system spreads a spectrum on the axis of a frequency by multiplying PN codes to transmission data, and the spread spectrum transmission data is transferred. In such a spread spectrum communication system, a spectrum of transferred data is approximate to the white noise. The spectrum of the transferring data is spread, a lot of kinds of spreading codes are provided, and the correlation among the spreading codes within one kind of spreading code sequence is limited in a little. Therefore, it has high confidentiality with respect to communications, high efficiency of frequency, and is highly proof against noise. It is the communication system expected to be mainly used for mobile and personal communication and wireless LAN in future.

Now more capacity of data and higher efficiency of frequency is highly demanded. Higher speed communication and more capacity of data are expected.

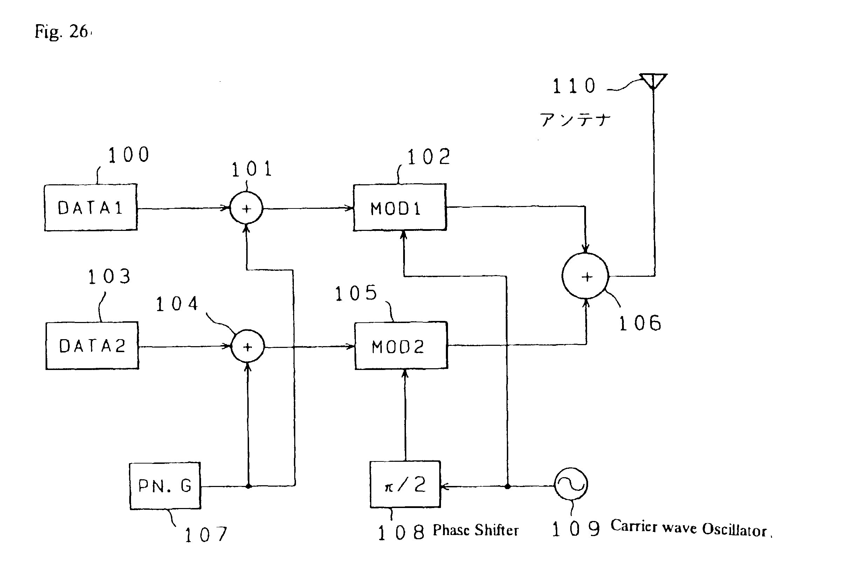

The outline of the transmitter of a spread spectrum communication system (SS, hereinafter) using QPSK modulation is shown in Fig. 26. In the figure, 102 and 105 are BPSK modulators, 107 is a PN code generator (PN.G) for generating PN code sequences, and 108 is a phase shifter for shifting phase of a carrier wave by $\pi/2$.

Data generated by a data generating portion (DATA1) 100 is added to a PN code generated in PN.G 107 in an adder 101. Data generated by a data generating portion (DATA2) 103 is added to a PN code generated in the PN. G 107. In this case, one cycle of PN code corresponds to one bit of the data. In the addition performed in adders 101 and 104, a logical exclusive or is performed, that is, a PN code is output as it is when the data is 0, and the PN code is inverted and output when the data is 1.

An output of an adder 101 is input to a BPSK modulator 102, and a carrier wave generated by a carrier wave oscillator 109 is modulated by BPSK. An output of an adder 104 is input to a BPSK modulator 105, and a carrier wave is modulated by BPSK, which wave is generated by a carrier wave oscillator 109 and is shifted in phase by $\pi/2$ by a phase shifter 108. An in-phase component of QPSK modulation (component I, hereinafter) can be obtained from a BPSK modulator 102, and an quadrature component of QPSK modulation (component Q, hereinafter) can be obtained from a BPSK modulator 105. These two components of BPSK modulation are added in an adder 106 to be QPSK modulation frequency. The QPSK modulation wave is transmitted from antenna 110.

Consequently, a multiplied spread spectrum QPSK signal is transmitted from the transmitter portion.

The structure of receiver side is not illustrated. When a spread spectrum multisignal is received, it is divided into components I and Q, and both components of data are demodulated by correlation calculation of the received signal with the same PN code as the PN code of the transmission side. The data transferred by an inverted PN code causes a minus correlative output, and the data by not inverted PN code causes a plus correlative output.

EP 0 700 170 A2 has been published after the priority date of the present application and discloses a method and apparatus for spread spectrum code pulse position modulation. Additional information is conveyed by modulating the position of the centre of a codeword within the symbol duration. Two differentially and independently time-shifted spread spectrum codewords may be modulated. Two spread spectrum code generators receive an appropriate time delay value and then generate the spread spectrum codeword in accordance with a calculated delay value, relative to the spread spectrum symbol interval centre. In this manner, the main lobes of the I and Q signals are shifted appropriately, in order to convey the desired information.

EP 0 439 807 A2 discloses a code shift keying communication system that comprises means for generating two M-series codes, a first M-series code being identical to a second M-series code except in its phase. Further, the system comprises means for selecting one of two M-series codes depending on the value of a particular bit being processed.

SUMMARY OF THE INVENTION

Though, conventional spread spectrum communication systems have confidentiality, high efficiency of a frequency, and are profit against noise, the data transmission capacity is small because one cycle of PN codes is used to one bit data to be transmitted. Also, the utility efficiency of a frequency is low because the frequency band of transmission is extremely wide due to the spread spectrum.

It is therefore the object of the present invention to provide a spread spectrum communication system where the data transmission capacity and the communication speed is improved.

This object is solved by the invention as claimed in the independent claim.

Preferred embodiments are defined in the dependent claims.

A spread spectrum communication system according to the present invention expresses the data to be sent by the phase difference between the first and the second components.

The present invention transfers the first PN code sequence itself as the first component, and transmits an integrated signal of sequences zero or more PN code sequences of the second PN code sequences with phase differences as the second component, and defines an information for transmitting by the number of the second PN codes corresponding to a cycle of said first PN code sequence.

A spread spectrum communication system according to the present invention performs as followings in order to achieve the above object.

In a spread spectrum communication system for transmitting data by multiplexing the first PN code sequences and the second ones having the same cycle as the first one, the second PN code sequence is generated by adding the predetermined number of basic PN code sequences shifted in-phase, and a transmission information is defined by combinations of the predetermined number of basic PN code sequences for a reference phase of the first PN code sequence.

Also, a spread spectrum communication system as above, a polarity of the first PN code sequence is controlled according to a predetermined bit of an information to be transmitted.

Further, a polarity of each basic PN code sequence of the second PN code sequence is determined according to a plurality of predetermined bits of information to be transmitted.

Furthermore, the first and the second PN code sequences are generated by a single PN code generating means.

Moreover, each of the first and second PN code sequences are transmitted by carrier waves different from each other.

In the spread spectrum communication system with two components according to the present invention, the first component consists of the first PN code sequence and the second component consists of an addition of a plurality of PN code sequences shifted in-phase. An information is defined by shifted phases of the PN code sequences of the second component in comparison with the first component.

Therefore, it is possible to improve the capacity and speed of the data transmission.

Hereinafter an embodiment of the present invention (QPSK) transmission is described with reference to the attached drawings.

BRIEF DESCRIPTION OF THE DRAWINGS

Fig. 1 shows a block diagram showing an embodiment used in the present invention.
Fig. 2 shows a block diagram showing a circuit performing conversion of data for transferring for the system in Fig. 1.
Fig. 3 shows a block diagram showing an embodiment of a receiving system used in the present system.
Fig. 4 shows a block diagram showing a system for converting an output of the system in Fig. 3 into serial data.
Fig. 5 shows a block diagram showing a circuit for controlling a PN code of a matched filter for receiving a component of Q.
Fig. 6 is a timing chart of the receiving system.
Fig. 7 shows a block diagram showing the second embodiment used in the present invention.
Fig. 8 shows a block diagram showing a circuit performing conversion of data for transferring for the system in Fig. 7.
Fig. 9 shows an addition circuit in Fig. 7.
Fig. 10 shows a block diagram of a receiving system used in the present system.

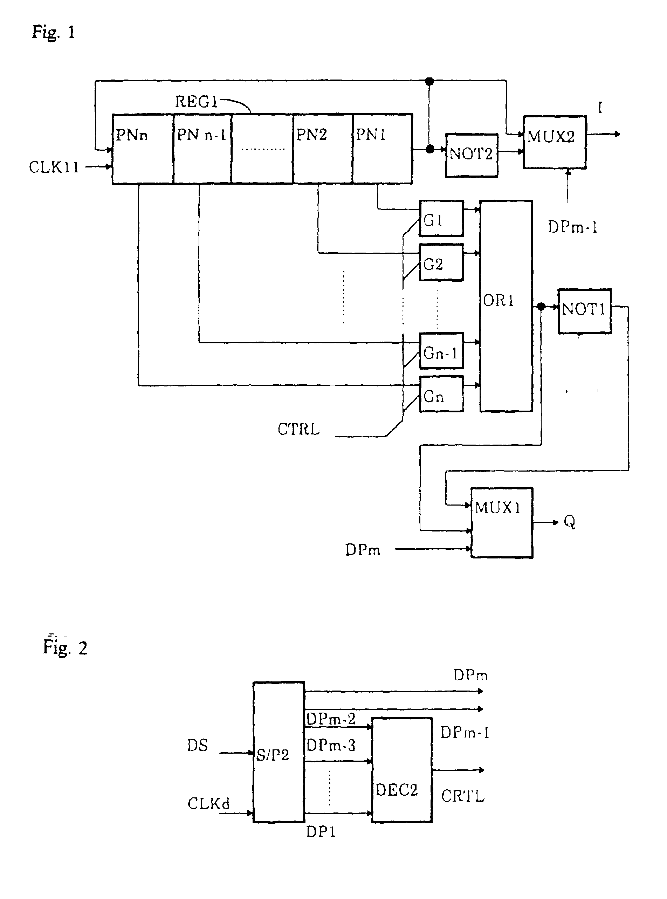

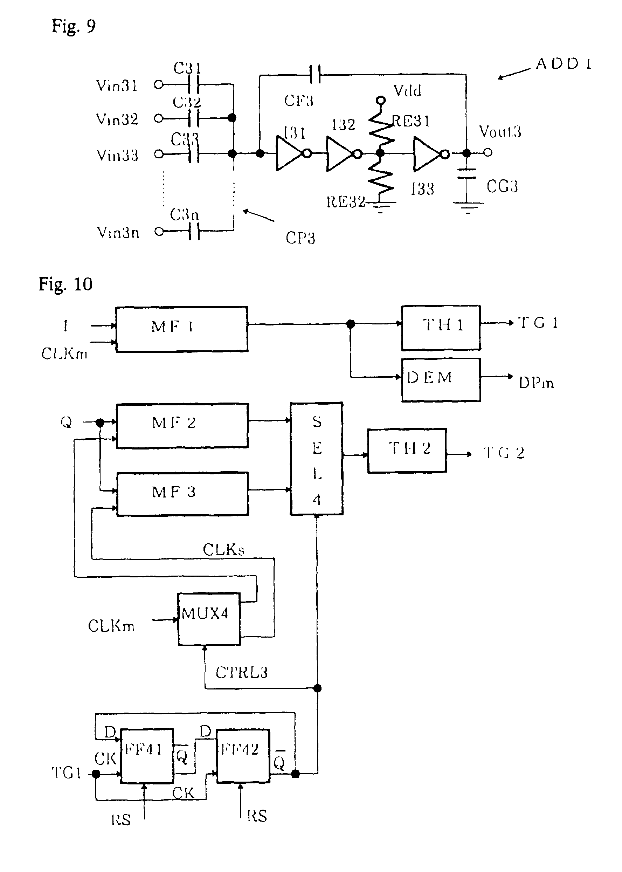

Fig. 1I shows a block diagram showing a system for converting an output of the system in Fig. 9 into serial data.

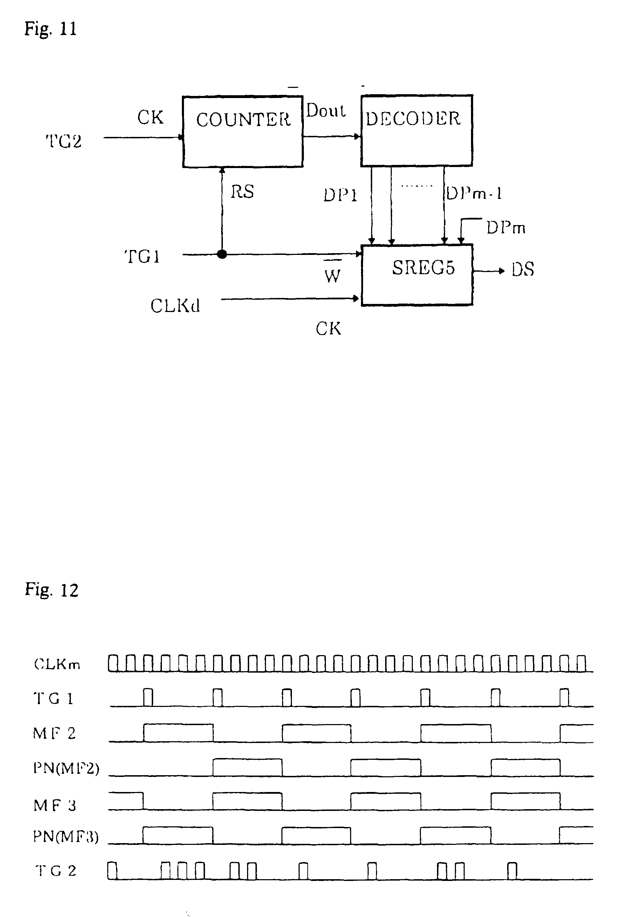

Fig. 12 is a timing chart of the receiving system.

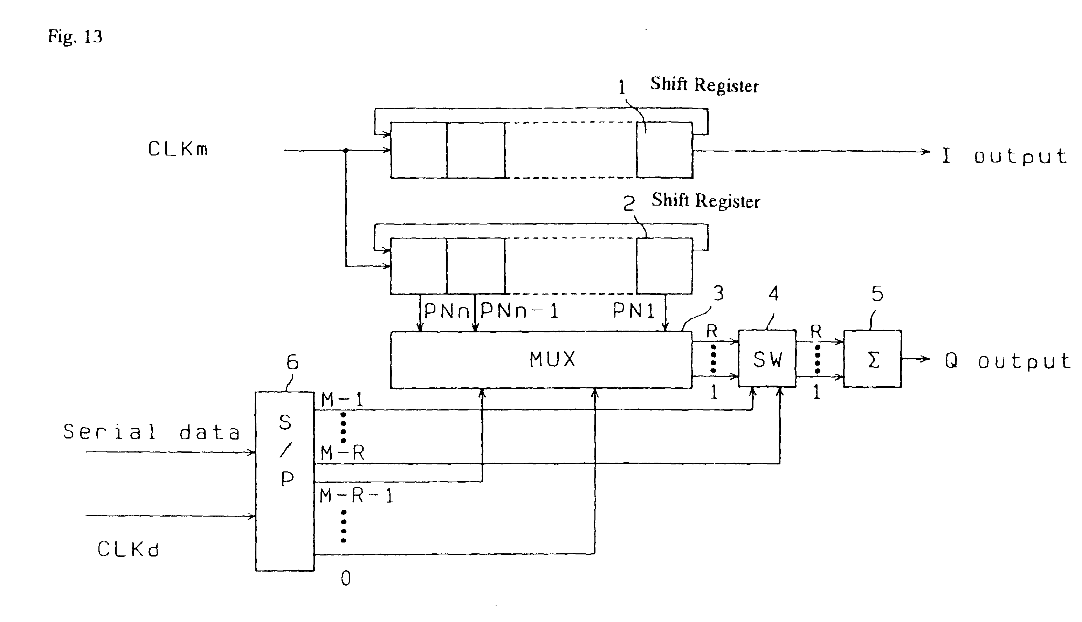

Fig. 13 shows a block diagram of the structure of a transmitting portion of the third embodiment of a spread spectrum communication system of the present invention.

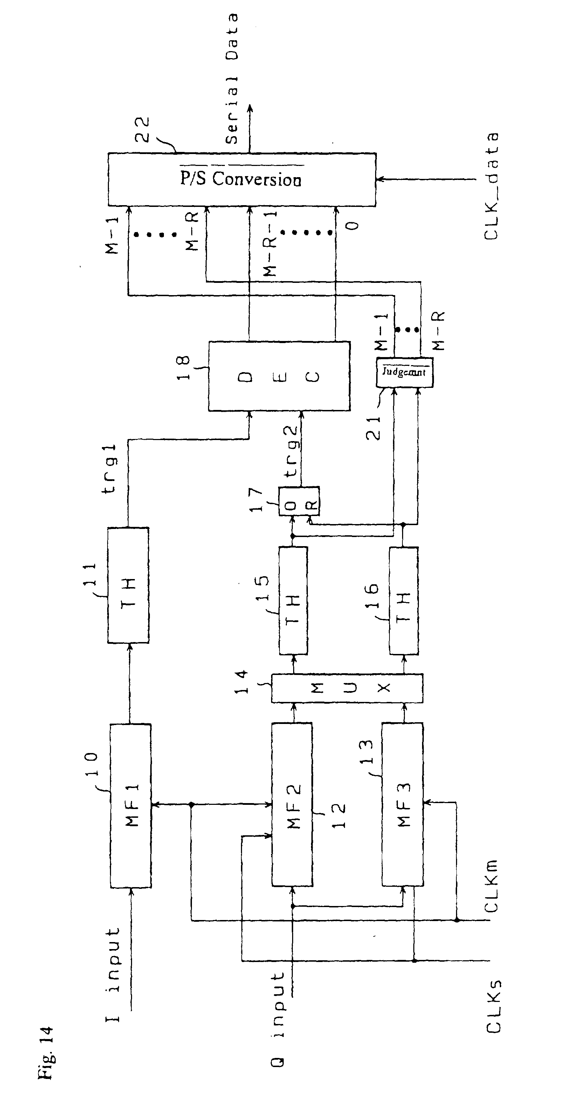

Fig. 14 shows a block diagram of the structure of a receiving portion of the third embodiment of a spread spectrum communication system of the present invention.

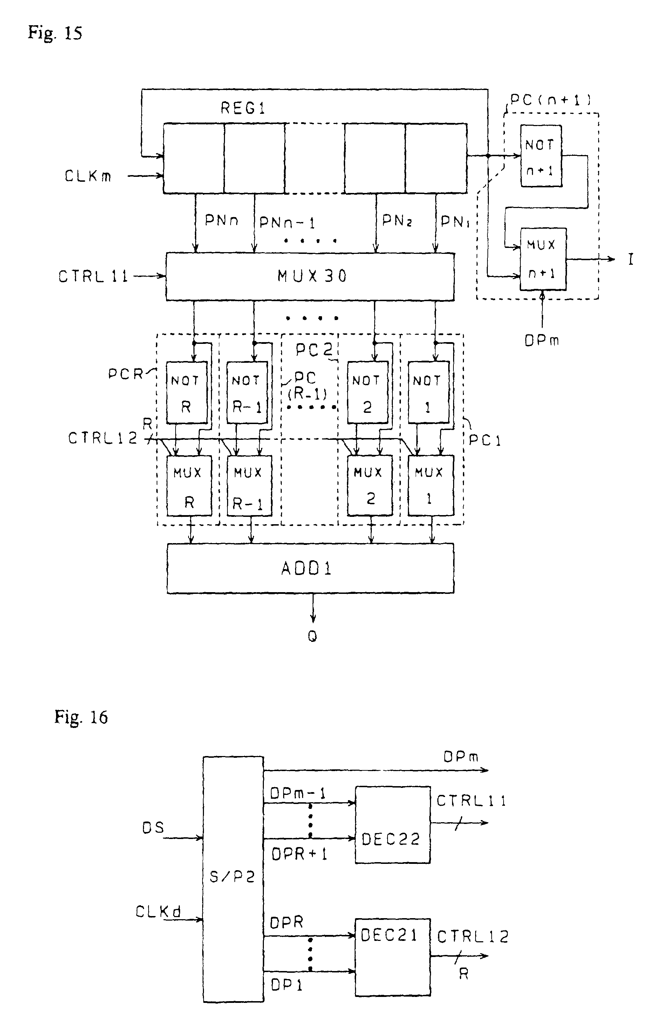

Fig. 15 shows a block diagram of the structure of a transmitting portion of the fourth embodiment of a spread spectrum communication system of the present invention.
Fig. 16 shows a block diagram of the structure of a transmitting portion for generating a control signal of the fourth embodiment of a spread spectrum communication system of the present invention.

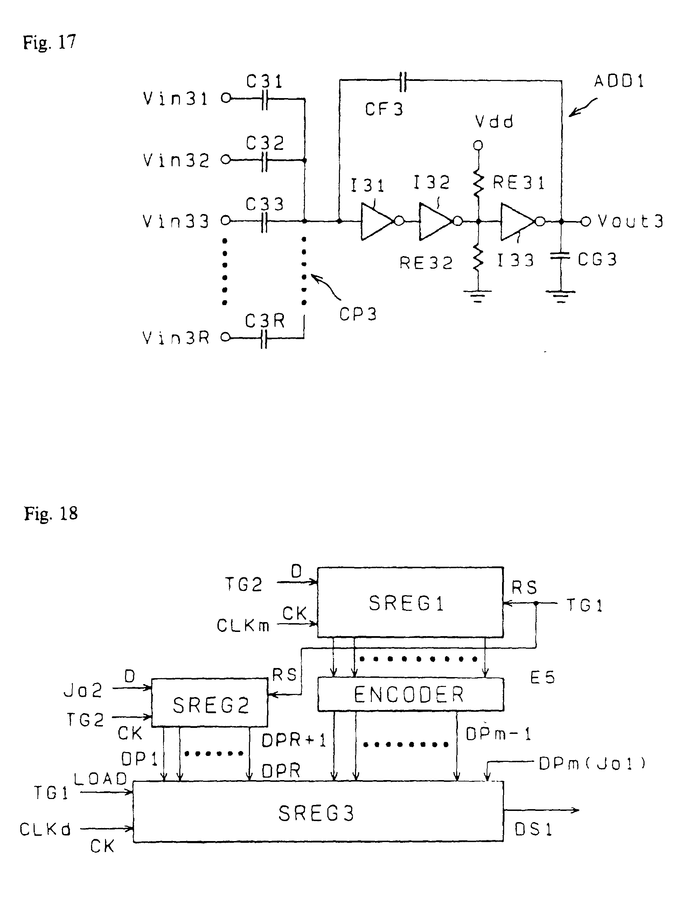

Fig. 17 shows a block diagram of the structure of an addition circuit in the transmitting portion of the fourth embodiment.
Fig. 18 shows a block diagram of the structure of the receiving portion for converting the coding data into the serial data of the fourth embodiment.

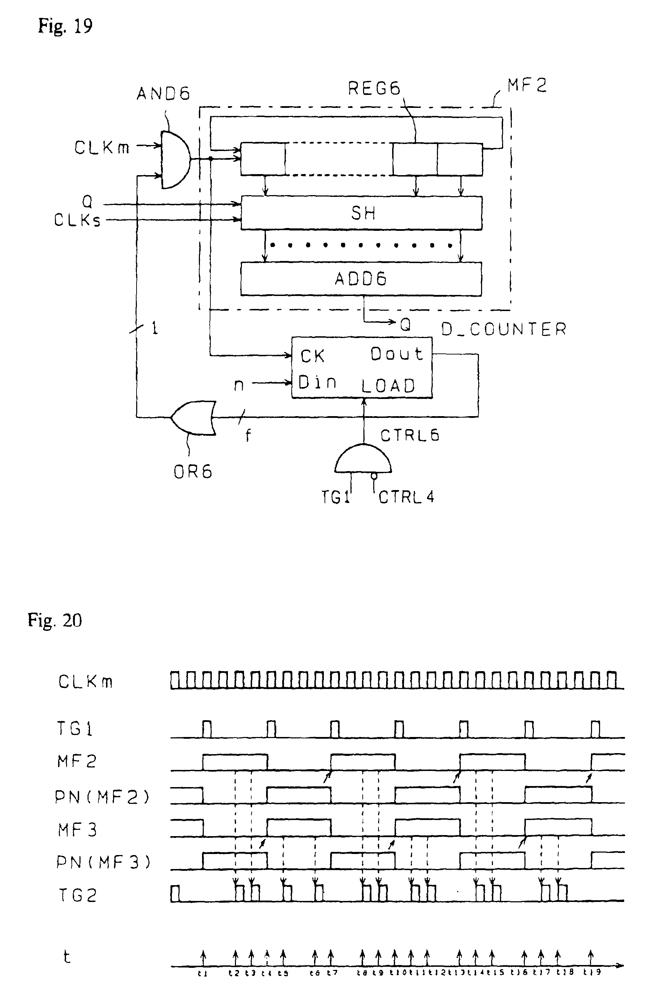

Fig. 19 shows a block diagram of the structure of the matched filter in the receiving portion of the fourth embodiment.

Fig. 20 is a timing chart of the receiving portion of the fourth embodiment.

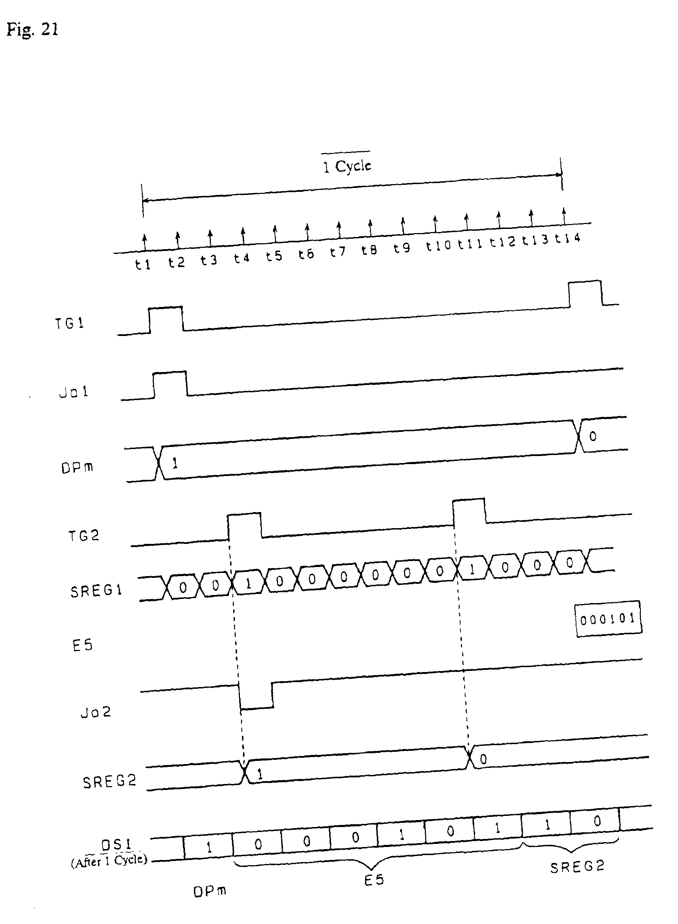

Fig. 21 is an exemplary timing chart showing more detail than Fig. 20.

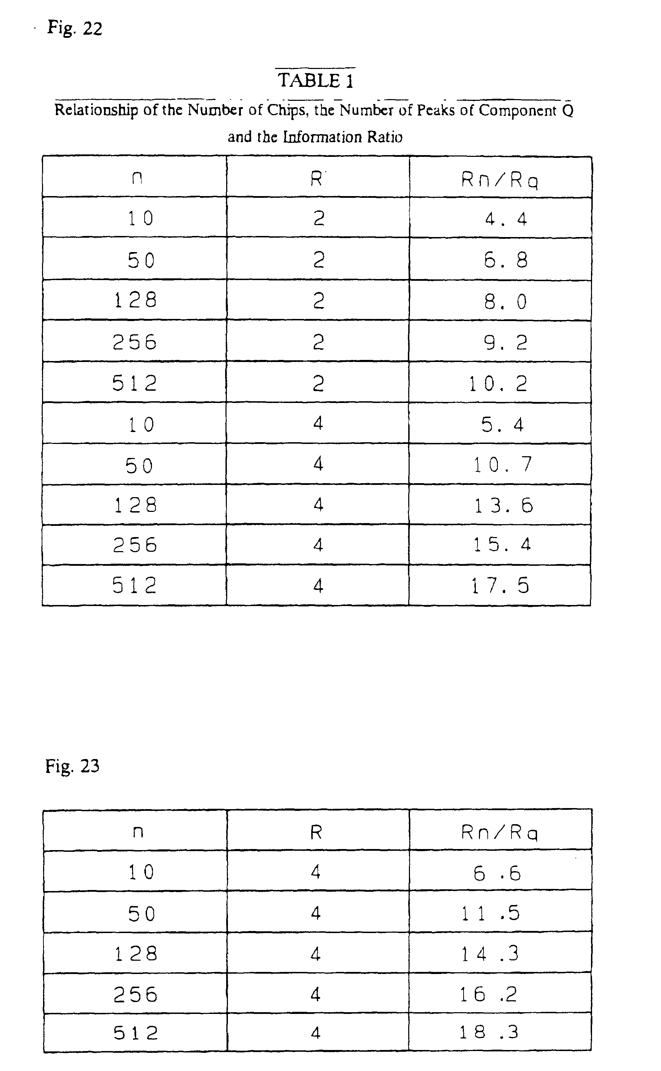

Fig. 22 is a table showing the relationship of the information rate ratios with respect to the number of chips and the number of peaks of the component Q.

Fig. 23 is a table showing the relationship of the information rate ratios when the number of the peak of the component Q is four.

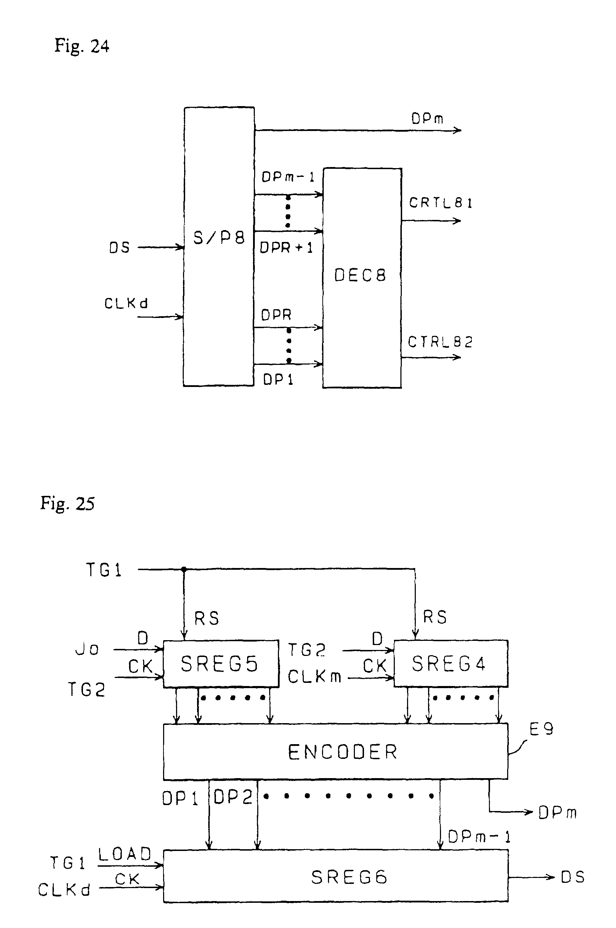

Fig. 24 shows a block diagram of the structure of the control signal generation portion in the transmitting portion of the fifth embodiment.

Fig. 25 shows a block diagram of the structure for converting the coded data into the serial data in the receiving portion of the fifth embodiment.

Fig. 26 shows a block diagram of the structure of a conventional spread spectrum communication system.

PREFERRED EMBODIMENT OF THE PRESENT INVENTION .

In Fig. 1, PN code for spread spectrum is stored in a shift-register REG1. The PN code itself or the inverted signal is transmitted as an component I. Therefore, the component I carries an information of 1 bit. Each stage of the shift-register REG1 is connected to the respective gates G1 to Gn which are controlled by a control signal CTRL to be opened and closed. The signal CTRL opens one of the gates G1 to Gn and one of the PN codes from PN1 to PNn stored in the shift-register passes through it. (In Fig. 1, the PN code PN1 is stored in the last stage of the shift-register and PN2 to PNn are successively stored from the stage before the last stage to the first stage.) The gate G1 to Gn are connected to the stages of shift-register, from the last stage to the first stage, respectively. That is, when a gate Gk is opened, a PN code of k-th stage from the last stage (PNk, in Fig. 1) passes through the gate. The PN code passed through the gate through a OR circuit OR1, appropriately inverted by a NOT gate, and transmitted as an component Q (a quadrature component of the QPSK).

The component Q is a PN code or the inversion. The system of the present invention having a phase difference of the component I transmits the phase difference, inversion and non-inversion of the I and Q components, as an information. As shown in Fig. 2, a serial data for transmission is transferred into parallel data DP1 to DPm of m bits (m is a maximum whole number below $\log_2(4n)$), n being a positive integer larger than 1, by a serial/parallel conversion circuit S/P2 synchronous to the predetermined clock CLKd. DP1 to DPm-2 are input to a decoder DEC2, and the control signal CTRL is generated in the decoder.

When the value expressed by binary numbers DP1 to DPm-2 is p, CTRL is settled so that the only gate Gp is opened among the gates G1 to Gn-The DPm decides whether a signal inverted by the NOT gate (NOT1) in response to whether an component Q is valid or not, and DPm-1 decides whether a signal inverted by the NOT gate (NOT2) in response to whether an component I is valid or not. An input signal and output signal of NOT1 are input to a multiplexer MUX1 and those of NOT2 are input to a multiplexer MUX2. A signal DPm is a control signal of the MUX1 and a signal DPm-1 is a control signal of the MUX2. The DPm and DPm-1 select a signal before or after inversion, for example, when DPm and DPm-1 are "1", they select an inverted signal, and when DPm and DPm-1 are "0", they select a non-inverted signal.

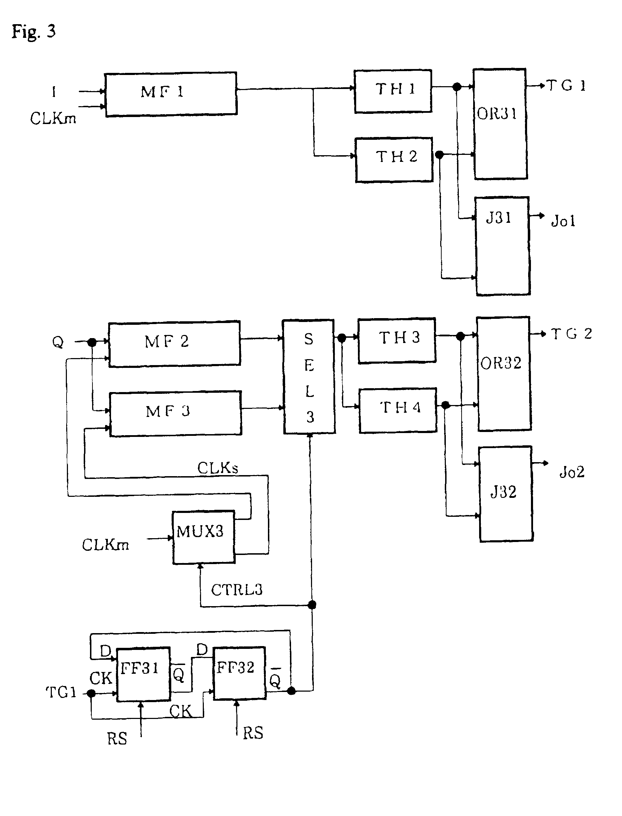

Fig. 3 shows a receiving system of the present communication system. A matched filter MF1 for receiving an component I, a matched filters MF2 and MF3 for receiving an component Q are provided. PN1 to PNn are settled as a multipliers in the matched filter MF1. When a PN code of the component I and the multiplier of MF1 coincide with each other, MF1 generates a peak of plus or minus. An output of MF1 is input to peak detecting circuits TH1 and TH2. A plus (non-inverted) peak is detected by TH1 and a minus (inverted) peak is detected by TH2. Output of TH1 and TH2 are input to OR31 of OR circuit, and a trigger signal TG1 is output when one of them detects a peak. Outputs of TH1 and TH2 are also input to a judgment circuit J31. When TH1 does not detect a peak and TH2 detects a peak, the J31 generates a high level output Jo1. Otherwise, Jo1 becomes low-level. The Jo1 corresponds to the DPm-1 in Fig. 2. Data of the component Q is alternatively input to MF2 and MF3.

The data input to MF2 or MF3 is synchronized with the data input to MF1. The signal TG1 is a timing signal for changing the data input to MF2 to the data input to MF3, and vice versa. When the data input is stopped, the phase difference is calculated for one of the matched filters MF2 and MF3, while the other of them is used for correlation calculation in order to detect the correlation peak.

A main clock CLKm is input to the MF1 for giving a timing of inputting data. A sub-clock CLKs is alternatively input to MF2 and MF3.

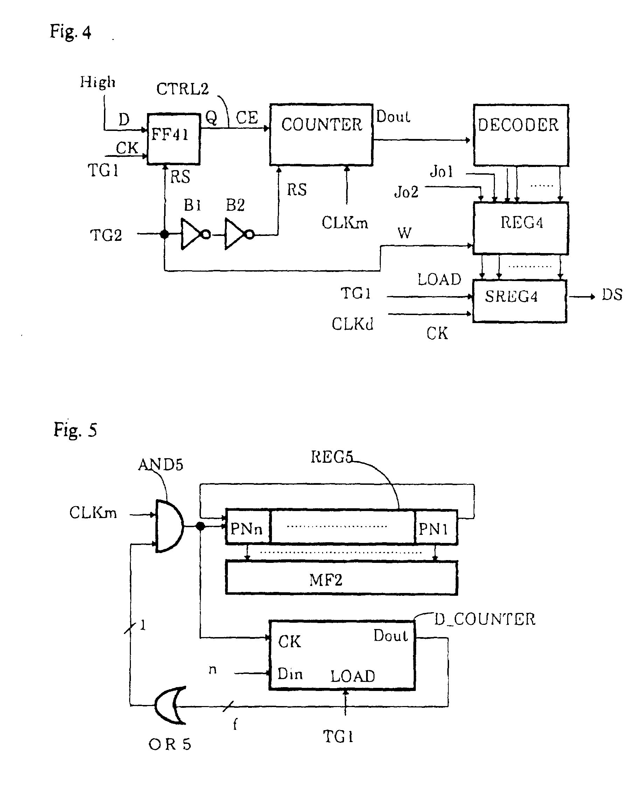

In Fig. 4, TG1 is input to a clock input CK of a flip-flop FF41. The high level input (shown by "High") connected to a data input (D) of FF41 is output as a high level signal from non-inverted output of FF41 (Q). The signal is used as a control signal CTRL2. The CTRL2 is input to a chip enable (CE) of a counter (shown by COUNTER), and the COUNTER works as a counter from the point that TG1 is generated. The main clock CLKm is input to the counter and the counter starts to count CLKm when TG1 is generated.

As shown in Fig. 3, the main clock CLKm is input to a multiplexer MUX3 which selects MF2 or MF3. The CLKs is generated as an output of MUX3. The CLKs is input to MF2 or MF3 from MUX3. Only the matched filter to which the CLKs is input receives the data of the component Q. The MUX3 is controlled to be switched by a control signal CTRL3 which inverts itself every time when TG1 is input through two stages of flip-flops FF31 and FF32. The TG1 is input to the clock input of FF31 (CK), and an inverted output of FF32 ($\bar{Q}$) is input to the data input of it. An inverted output of FF31 ($\bar{Q}$) is input to a data input of FF32 (D), and the TG1 is input to a clock input of it (CK). Therefore, an output of FF32 becomes alternately high level and low level every time when TG1 is input.

When the TG1 is output at a timing and a CLKs has been input to the MF2 until the timing, the MUX3 is switched for supplying the CLKs to the MF3. Then, the PN code is circulated with respect to MF2. A selector SEL3 is switched to the MF2 at the timing TG1 is output. The switching is controlled by CTRL3. An output of SEL3 is input to peak detecting circuits TH3 and TH4. A plus (non-inverted) peak is detected by the TH3, and a minus (inverted) peak is detected by the TH4. Outputs of TH3 and TH4 are input to an OR circuit OR32. When one of them detects a peak, a trigger signal TG2 is output. Outputs of TH3 and TH4 are also input to a judgment circuit J32. When the TH3 does not detect any peak and the TH4 detects a peak, J32 generates a high level output Jo2. Otherwise, Jo2 is low level. The Jo2 corresponds to the DPm in Fig. 2.

As mentioned above, the period, from the time when the TG1 is generated to the time when the TG2 is generated, corresponds to the values DP1 to DPm-2. The COUNTER starts counting at the timing when the TG1 is generated and stops counting at the timing when the TG2 is generated. The TG2 is input to a reset input of FF41 (RS), and also to a reset input of the COUNTER (RS) through buffers B1 and B2. The COUNTER is returned to the initial state after certainly counting the number of CLKm from the first to the timing of the input of TG2. An output of the COUNTER is input to a decoder (shown by DECODER) and is converted into DP1 to DPm-2 of the binary value corresponding to the period from TG1 to TG2. The converted value is input to a register REG4 together with the Jo1 and Jo2. The REG4 receives the value synchronous to the TG2. The received value is held in the REG4 until the output timing of TG1, and then transferred to a shift-register SREG4 which has the function of data loading, and to which the TG1 is input to the load controlling input (LOAD). The CLKd is always input to the SREG4, and the transfer signal DS is output from it as a serial output of the SREG4. A transferred signal is demodulated.

As shown in Fig. 5, the PN1 to PNn are supplied to the matched filter MF2 from a shift-register REG5. Peripheral circuits are omitted in Fig. 3 The data of the shift-register is started to be circulated at the timing the signal TG1 is generated. The TG1 is input to a loading data controlling input (LOAD) of a down-counter (D_COUNTER), and the number of PN codes n is loaded. A binary output (f bit: f is a minimum whole number not less than $\log_2 n$) is input to a gate AND5 after integrating by a gate OR5. A CLKm is also input to the AND5. Therefore, the AND5 is opened when the counter value of D_COUNTER is equal to or more than 1 and CLKm is input to REG5.

When n number of CLKm are input to the D_COUNTER after the TG1 is output, the count value of the C_COUNTER is 0 and gate AND5 is closed. Therefore, the PN code once circulates, returns to the initial stage, and prepare the next processing of the matched filter. On this processing, a phase difference between TG1 and TG2 is calculated by the COUNTER at the timing when TG2 is generated. Since the matched filter circulating the PN code cannot receive new component of Q, the matched filter supplies CLKs to one of other matched filter (MF2 or MF3). As the MF3 is structured similarly to the MF2, the description is omitted.

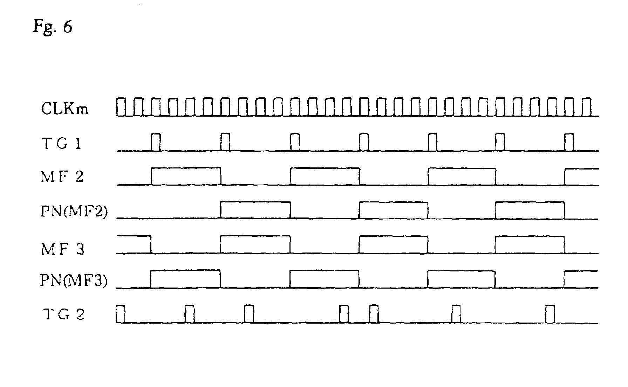

Fig. 6 is a timing chart of an exemplary timings of inputting data of the main clock CLKm, TG1 the signal and the data receiving timing of the MF2 (shown by MF2), a PN code circulation in MF2 (shown by PN (MF2)), data receiving timing of the MF3 (shown by MF3), a PN code circulation in MF3 (shown by PN (MF3)) and the signal TG2. Data is alternately input to MF2 or MF3 at the timing when the signal TG1 is generated. Simultaneously, the matched filters MF2 and MF3 are switched with respect to the circulation of PN code.

As above, when the information to be transmitted is defined by a phase difference of the peak of components of I and Q, and inversion and non-inversion of the peak, the information rate Rn is as in formula (1) in the case of a spreading ratio of n.

$$Rn = \frac{\log_2(4n)}{n \cdot Tc} \tag{1}$$

Tc in formula (1) is a chip time. The conventional information rate Rq is expressed in formula (2) in the case where each I cannel and Q channel transfers a 1 bit information by n chip (1 information symbol).

$$Rq = \frac{2}{n \cdot Tc} \tag{2}$$

A ratio of them is in formula (3).

$$\frac{Rn}{Rq} = \frac{\log_2(4n)}{2} \tag{3}$$

TABLE 1 shows the results of calculations by replacing numerical values with n in formula (3). It shows that the quantity of information is increased several times as conventional one. It can be said that the speed of communication is heightened.

TABLE 1

| n | Rn/Rq |
|-----|-------|
| 10 | 2.5 |
| 50 | 3.5 |
| 128 | 4.5 |
| 256 | 5.0 |
| 512 | 5.5 |

In the above embodiment, the components I and Q consists of the same PN code sequence. However, it is also possible to give different PN code sequences to 1, and the spreading code sequence of the matched filters MF2 and MF3 correspond to the PN code sequences. Also, it is possible to transfer and receive the first and second components of a communication system other than QPSK, for example, the first and second components of different channels can be transmitted by different carrier wave in the similar manner to the first embodiment.

Hereinafter the second embodiment transferred by a carrier frequency of the spread spectrum communication system according to the present invention is described with reference to the attached drawings. The first components are in phase (component I) and the second ones are orthogonal (component Q).

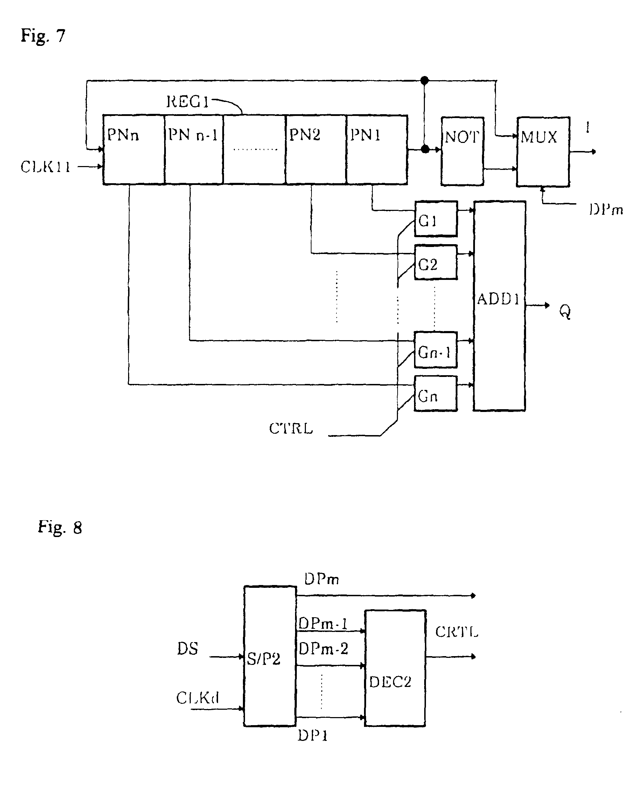

In Fig. 7, PN code for spread spectrum is stored in a shift-register REG1. The PN code itself or the inverted signal is transmitted as an component I by a carrier frequency (cos2 π ft) of the modulation of BPSK (Binary Phase Shift Keying). Therefore, the component I carries an information of 1 bit. Each stage of the shift-register REG1 is connected to the respective gates G1 to Gn which are controlled by a control signal CTRL to be opened and closed. The signal CTR opens none of, or one or more of the gates G1 to Gn, and none of, or one or more of the PN codes stored in the shift-register pass through the gates. (In Fig. 7, the PN code PN1 is stored in the last stage of the shift-register and PN2 to PNn are successively stored from the stage before the last stage to the first stage.) The gate G1 to Gn are connected to the stages of shift-register, from the last stage to the first stage, respectively. That is, when a gate Gk is opened, a PN code of k-th stage from the last stage (PNk, in Fig. 7) passes through the gate. The PN codes pass through the gates are added by an addition circuit ADD1, and transmitted as a component Q (an quadrature component of the QPSK).

The component Q is an integrated signal of a plurality of PN code sequences of a number from zero to more than 2. In the present embodiment, the number of the PN code sequences of the component Q is transferred as an information. As shown in Fig. 8, a serial data to be transmitted is converted into parallel data DP1 to DPm of m bits by a serial/parallel conversion circuit S/P2 synchronously to the predetermined clock CLKd. DP 1 to DPm-1 are input to a decoder DEC2, and the control signal CTRL is generated in the decoder.

When the value expressed by binary numbers DP1 to DPm-1 is p, CTRL is settled so that p number of gates are opened among the gates G1 to On.

An inverting circuit NOT is connected to the final stage of a REG1. An input and output of the inverting circuit NOT are input to a multiplexer MUX. The DPm is a control signal of the MUX which outputs NOT-output (inversion) when DPm is "1" and NOT-inputs (non-inversion) when it is "0".

In Fig. 9, in the addition circuit ADD1, outputs from G1 to Gn are represented by input voltages from Vin31 to Vin3n which are integrated by a capacitive coupling CP3 consisting of capacitances C31 to C3n. An output of CP3 is input to an inverted amplifying circuit consisting of three stages MOS inverters I31, I32 and I33. An output of I33 is fed back to an input of I31 through a feedback capacitance CF3. The inverted amplifying circuit outputs an output Vout3 in formula (4) with high linearity by forming a feedback system keeping enough high open gain. Outputs formed by "0" and "1" of G1 to Gn are added as the one formed by "-1" and "+1". According to it, "1"+"1"=2, "1"+"0"=0 and "0"+"0"=-2. An output Vout3 is an analog signal, and an component Q of a base band. This signal can be ternary number or higher. It can be transferred to a communication route by a carrier frequency shift (sin2 π ft) by an amplitude modulation.

$$Vout3 = Vdd - \frac{\sum_{i=1}^{n} Vin3i \cdot C3i}{CF3} \qquad (4)$$

In this formula, it is defined as below.

$$C31 = C32 = ... = C3n = \frac{CF3}{n} \qquad (5)$$

Therefore, formula (4) can be transformed into formula (6).

$$Vout3 = Vdd - \frac{1}{n}\sum_{i=1}^{n} Vin3i \qquad (6)$$

The addition circuit outputs the voltage corresponding to the addition result Vin31 to Vin3n. The output is transferred after scaling or other processing. If a digital processing is advantageous, a digital output can be generated by forming the above circuit by a well-known digital circuit.

Fig. 10 shows a receiver system of the present system. A matched filter MF1 for receiving an component I, a matched filters MF2 and MF3 for receiving an component Q are provided. PN1 to PNn are settled as multipliers in the matched filter MF1. When a PN code of the component I and the multiplier of MF1 coincide with each other, MF1 generates a peak. The peak is detected by a peak detecting circuit TH1, and a trigger signal TG1 is generated. An output of MF1 is input to a demodulating circuit DEM, and the peak is judges whether it is plus or minus in the DEM. The judgment signal is the DPm. When a minus peak is detected, DPm=1 is output and when a plus peak is detected, DPm=0 is output. Data is alternatively input to MF2 and MF3.

The data input to MF2 or MF3 is synchronized with the data input to MF1. The signal TG1 is a timing signal for changing the data input to MF2 to the data input to MF3, and vice versa. When the data input is stopped, the phase difference is calculated for one of the matched filters MF2 and MF3, while the other of them is used for correlation calculation in order to detect the correlation peak.

As one PN code is circularly used in the matched filter MF2 or MF3 which has stopped receiving the component Q, the matched filter generates peaks every when. When r number of PN code sequences (PN code length of N) are transferred, r peaks are always generated during circularly shifting the sequences in the matched filter N times. The signal TG2 is generated once on each peak. As the component Q including noise due to transferring line is of multi-value, the noise margin is outwardly not good. However, it can be canceled to some degree when a PN code sequence is detected because it is the signal generated by adding the PN code sequences.

A main clock CLKm is input to the MF1 for giving a timing of inputting data. A sub-clock CLKs is alternatively input to MF2 or MF3.

In Fig. 11, the TG1 is input to a reset input (RS) of a counter (shown by COUNTER). The counter newly counts when TG1 is generated. A trigger signal TG2 which is generated when MF2 or MF3 generates peaks is input to a clock input of a counter (CK). The counter starts to count TG2 when TG1 is generated.

As shown in Fig. 10, the main clock CLKm is input to a multiplexer MUX4 which selects MF2 or MF3. CLKs is generated as an output of MUX4. The CLKs is input to MF2 or MF3 from MUX4. Only the matched filter to which the CLKs is input inputs the data of the component Q The MUX4 is controlled to be switched by a control signal CTRL3 which inverts itself every time when TG1 is input through two stages of flip-flops FF41 and FF42. The TG1 is input to the clock input of FF41 (CK), and an inverted output of FF42 ($\overline{Q}$) is input to the data input of it. An inverted output of FF41 ($\overline{Q}$) is input to a data input of FF42 (D), and the TG1 is input to a clock input of it (CK). Therefore, an output of FF42 becomes alternately high level and low level every time when TG1 is input.

When the TG1 is output at a timing and a CLKs has been input to the MF2 until the timing, the MUX4 is switched for supplying the CLKs to the MF3. Then, the PN code is circulated with respect to MF2. A selector SEL4 is switched to the MF2 at the timing TG1 is output. The switching is controlled by CTRL3. An output of SEL4 is input to a peak detecting circuits TH2. When TH2 detects a peak, a trigger signal TG2 is output.

As mentioned above, the period, from the time when the TG1 is generated to the time when the TG2 is generated, corresponds to the values DP1 to DPm-2. The COUNTER starts counting at the timing when the TG1 is generated and stops counting at the timing when the TG2 is generated. An output of the COUNTER is input to a decoder (shown by DECORDER) and is converted into DP1 to DPm-1 of the binary value corresponding to the number of TG2. The converted value is input to a shift-register SREG5. The SREG5 receives the value synchronous to the TG1. The clock CLKd is input to SPEG5. The value input to SREG5 is output as a serial output of SREG5. The serial output is the transferring signal DS. A transferred signal is demodulated.

As shown in Fig. 5, the PN1 to PNn are supplied to MF2 from a shift-register REG5. The data of the shift-register is started to be circulated at the timing TG1 is generated. The TG1 is input to a loading data controlling input (LOAD) of a down-counter (D_COUNTER), and the number of PN codes n is loaded. A binary output (f bit) is input to a gate AND5 after integrating by a gate OR5. A CLKm is also input to the AND5. Therefore, the AND5 is opened when the counter value of D_COUNTER is equal to or more than 1 and CLKm passes through AND5. The number of bits f is the value calculated by formula (7) corresponding to the number n.

$$\log_2 n \le f < \log_2 n + 1 \tag{7}$$

When n number of CLKm are input to the D_COUNTER after the TG1 is output, the count value of the C_COUNTER is "0" and gate AND5 is closed. Therefore, the PN code once circulates, returns to the initial stage, and prepare the next processing of the matched filter. On this processing, the number of TG2 is counted by the COUNTER. As the matched filter circulating the PN code cannot receive a new component of Q, the matched filter supplies CLKs to one of other matched filter (MF2 or MF3). As the MF3 is structured similarly to the MF2, the description is omitted.

Fig. 12 is a timing chart of an exemplary timings of inputting data of the main clock CLKm, the signal TG1, the data receiving timing of the MF2 (shown by MF2), a PN code circulation in MF2 (shown by PN (MF2)), the data receiving timing of MF3 (shown by MF3), a PN code circulation in MF3 (shown by PN (MF3)) and the signal TG2. Data is alternately input to MF2 or MF3 at the timing when TG1 is generated. Simultaneously, the circulation of PN code is switched.

As above, when the information to be transmitted is defined by a phase difference of the peak of components of I and Q, and inversion and non-inversion of the component I, the information rate Rn is as in formula (8) in the case of a spreading ratio of n.

$$Rn = \frac{\log_2 2n}{n \cdot Tc} \tag{8}$$

Tc in formula (8) is a chip time. The conventional information rate Rq is expressed in formula (2) in the case where each I cannel and Q channel transfers a 1 bit information by n chip of QPSK for transferring orthogonal two components. A ratio of them is in formula (9).

$$\frac{Rn}{Rq} = \frac{\log_2 2n}{2} \tag{9}$$

TABLE 2 shows the results of calculations by replacing numerical values with n in formula (2). It shows that the quantity of information is increased several times as conventional one. It can be said that the speed of communication is heightened.

TABLE 2

| n | Rn/Rq |
|-----|-------|
| 10 | 2.1 |
| 50 | 3.3 |
| 128 | 4.0 |
| 256 | 4.5 |
| 512 | 5.0 |

In the above embodiment, the components I and Q consists of the same PN code sequence. However, it is also possible to give different PN code sequences to I, and the spreading code sequences of the matched filters MF2 and MF3 correspond to the PN code sequences. Also, it is possible to transfer and receive the first and second components of a communication system other than the system transferring orthogonal two components, for example, the first and second components of different channels can be transmitted by different carrier waves in the similar manner to the second embodiment. Further, more information can be transferred by inverting the peak of the component Q (the second component) in the second embodiment.

Fig. 13 shows the third embodiment of a transmitting portion of a spread spectrum communication system (SS) according to the present invention. The SS communication system uses QAM modulation. In Fig. 13, the structure until the base-band modulation before the QAM moderation is shown.

In Fig. 13, 1 and 2 are shift-registers having feedback lines. PN code sequences are stored in the shift-registers 1 and 2, and is shifted on every timing of a clock CLKm, so as to be circulated in the shift-registers 1 and 2. The PN code sequences circulated in the shift-registers 1 and 2 may be the same or are different from each other, however the number of chips of the PN code sequences, that is the period of a cycle of PN code sequence must be the same. The PN code sequence output from the shift-register 1 becomes an input data of the component I when a QAM modulation is performed.

Outputs PN1 to PNn of each of stages of the shift-register 2 are input to a multiplexer (MUX) 3. The outputs PN 1 to PNn are PN code sequences. These PN code sequences have very low correlation with one another, due to phase offset with one another.

Data of (M-R) bits of data is also input to (MUX)3. The PN code sequences PN1 to PNn input to the (MUX)3 are combined by two or more and output from (MUX)3 according to the information of input data of (M-R) bits. The number of output of the PN code sequences is R.

R number of PN code sequences output from (MUX)3 is input to a switch portion 4. R bits of input data is input to the switch portion 4. According to the bit of input data of the R bits, the polarity of R number of PN code sequences supplied by (MUX)3 is controlled. For example, the PN code sequence is output without inversion by "0" bit, and it is output after inversion by "1" bit.

The R number of PN code sequences controlled in such a way are output by adding all the PN code sequences by an addition circuit 5. The addition output becomes an input data when QAM modulation is performed.

The input data to be transmitted by the transmitting portion is input to serial/parallel converter (S/P) 6 as a serial data, and converted into parallel data whose one block is M bit width by the timing of a data clock CLKd. The parallel data of M bit width is divided into R bits and (M-R) bits. The data of (M-R) bits is supplied to the (MUX)3 as a controlling data, and the rest of R bits is supplied to the switch portion 4 as a controlling data.

The information transmission rate of data in the transmitting portion is as below.

As R number of PN code sequences are selected in N number of PN code sequences from PN1 to PNn, $_{N}C_{R}$ of combinations can be transmitted. Also as R number of polarities of PN codes systems are controlled, $2^{R}$ of combinations can be transmitted. Therefore, the transmissible number of bits is as in formula (10).

$$\log_2(2^{R} \cdot {_N}C_{R}) \text{ [bit]} \tag{10}$$

The information transmission rate $R_N$ is as in formula (11) assuming the number of chips of PN code sequences is N.

$$RN = \{\log_2(2^{R} \cdot {_N}C_{R})\}/N \text{ [bit/symbol]} \tag{11}$$

The number of transmissible bits by one cycle of PN code sequence is 1 bit by the phase I, and 1 bit by the phase Q. As the transference rate $R_Q$ is 2/N, the present invention can remarkably improve the information transmission rate.

For example, assuming that N=128 and R=2, the conventional transmission rate $R_Q$ is 1/64, and the transmission rate $R_N$ by the present invention is approximately 15/128. The transmission speed of the present invention is approximately 7.5 times as fast as the conventional one. When N is 85, the speed of transmission rate is about 12928 times.

In the SS communication system of the present invention, a plurality of PN code sequences are combined according to an information to be transmitted. It improves the capacity of transmissible data, and further improves the capacity of data by controlling the polarity of combined PN code sequences according to the data to be transmitted.

In this case, on the receiving side, a plurality of correlational peaks of the number of PN code sequences combined by the components Q can be obtained. The transferred data is decoded according to the locations of the plurality of correlational peaks. Therefore, the reference phase of the locations of the peak is necessary. It is obtained by transferring the PN code sequences output from the shift register 1 as a component I.

Fig. 14 shows an exemplary construction of the receiver side of the SS communication system according to the present invention.

In Fig. 14, the signal I of the in-phase component for obtaining the reference phase and the signal Q of the quadurature component modulated from the transferred data are obtained by demodulation and division of the QAM modulated signal.

The signal I is input to a matched filter (MF1) 10 and a correlation is calculated. In this case the PN code sequence stored in a shift-register 1 of the transmitting portion is settled as a multiplier.

In the matched filter 10, a correlation peak is output when a high correlation is calculated between the multipliers, input and circulated on every timing of clock CLKm, and the signal I. The correlation peak is detected by a peak detecting circuit TH11. The detecting signal is supplied to a decoder (DEC) 18 as the first trigger signal (trg 1) and (M-R) bit is decoded by the decoder 18.

The signal Q is alternately input to a matched filter (MF2) 12 or a matched filter (MF3) 13, and a correlation with a PN code sequence is alternately calculated. In this case, a PN code sequence stored in the shift-register 2 in the transmitting portion is settled in the matched filters 12 and 13 as a multiplier and is circulated.

On the timing that the signal Q is input to the matched filter 12, the PN code sequence which is input to the matched filter 13 is circulated and simultaneously the correlation as calculated. On the timing that the signal Q is input to the matched filter 13, the correlation is calculated by the matched filter 12. The signal Q is alternately input to the matched filter 12 or 13, and the correlation is calculated in the matched filter 12 or 13 to which the signal Q is input. A clock CLKs for giving timing for alternatively inputting the signal Q and the clock CLKm for circulating PN code sequence are input to the matched filters 12 and 13.

The correlation output calculated by matched filters 12 and 13 is selectively output from a multiplexer (MUX) 14. A plus correlation peak of a correlation output from the (MUX)14 is detected by a peak detecting circuit 15, and a minus correlation peak is detected by a peak detecting circuit 16. They are input to an OR circuit 17 and a judgment circuit 21. A correlation peak output compounded by the OR circuit 17 is input to the decoder 18 as the second trigger (trg 2). The decoder 18 decodes a location of time of R number of the second trigger signal with the reference of the first trigger signal, then a decoded data of (M-R) bit is obtained.

The decoded data is input to a P/S converter 22 as 0 bit or (M-R-1) bit.

In a judging circuit 21, the polarity of the correlation peak detected by the peak detecting circuits 15 and 16 is judged, and R number of data is decoded "0" or "1" according to the polarity of the R number of correlation peaks detected within the correlation in one cycle of PN code sequence. Decoded R number of data is input to the P/S converter 22 as R bit of data from (M-R) to (M-1).

M bit data from bit 0 to bit (M-1) which is input to the P/S converter 22 is converted into a serial data and is output. The converting timing of this case depends on the data clock CLKd.

The receiving portion of the SS communication system of the present invention obtains a plurality of correlation peaks in a period of PN code sequence, decodes transmission data according to the number and the timing, and decodes the transferred data according to the polarity of each correlation peak.

The transferred data transmitted by the transmitting rate expressed by the formula (11) is decoded.

The fourth embodiment of SS communication system according to the present invention is described with reference to Figs. 15 to 22.

Fig. 15 shows the structure of a transmitting portion. In Fig. 15, the PN code sequence for spread spectrum is stored in a shift-register REG1. A PN code sequence is output from the final stage of the shift-register, and input to a polarity controlling portion PC(n+1). In the polarity controlling portion PC(n+1), the polarity is controlled by 1 bit of DPm in the transmission data, and the PN code sequence is output as it is. Or the inverted signal of it is output as the component I.

The each stage of the shift-register REG1 is connected to a multiplexer MUX30. The first controlling signal CTRL11 controls the multiplexer MUX30, and R number of the PN code sequences after phase offset stored in the shift-register REG1 are selected and passed. In Fig. 15, PNI of the PN code sequences is output from the final stage, and PN2, ..., PNn with phase-offset are successively output toward the first stage.

Each of the R number of data of the PN code sequences passed through a multiplexer 30 are input to polarity controlling circuits PC1 to PCR. The second controlling signal CTRL12 is input to each of polarity controlling circuits PC1 to PCR. The polarity of PN code sequence passed through the multiplexer 30 is controlled in response to the signal CTRLT2. The structures of the polarity controlling circuits PC1 to PCR are the same, which include inverting circuits NOT1 to NOTR and multiplexers MUX1 to MUXR. In polarity controlling circuits PC1 to PCR, inputs of inverting circuits NOT1 to NOTR (PN code sequence before inversion) and outputs of them (PN code sequence after inversion) are input to multiplexers MUX1 to MUXR, respectively. For example, an input and output of an inverting circuit NOT11 is input to the multiplexer MUX11, and the PN code to be output is controlled by the second controlling signal CTRL12.

A polarity controlling circuit PC(n+1) to which an output from the final stage of the shift-register REG1 is structured by an inverting circuit NOTn+1 and a multiplexer MUXn+1 to which an input and an output of the inverting circuit NOTn+1 are input. The multiplexer MUXn+1 is controlled to be switched according to the signal DPm. The PN code sequence input to the MUXn+1 or an inverted signal of the PN code is output as a component I. The second control signal CTRL12 is input to each of multiplexers MUX1 to MUXR so as to control the multiplexers to be switched. Outputs of multiplexers MUX1 to MUXR are input to an addition circuit ADD1. All the outputs are added by the addition circuit ADD1 and output as a component Q.

The component Q is a combination of the predetermined number of R of the PN code sequences. In the present invention, the transmission data is transmitted as a combination of a plurality of PN code sequences successively shifted in phase, and each PN code sequences is inverted or not inverted.

The structure for generating the first control signal CTRL11, the second control signal CTRL12 and the signal DPm from the transmitting data is shown in Fig. 16.

In Fig. 16, serial data DS to be transmitted is converted into parallel data DP1 to DPm of m bit of 1 block, by serial/parallel converting circuit (S/P2) synchronously to the predetermined data clock CLKd. r bit data DP1 to DPr in them is input to the decoder DEC21, the second control signal CTRL12 is generated, (m-r-1) bit of (DPr+1) to (DPm-1) are input to a decoder DEC22, and the first control signal CTRL11 is generated.

The other one bit of DPm is input to a multiplexer MUXn+1 as the third control signal.

In this case, for example, assuming that the number of chips n of the PN code sequences is 16, the number of bits of parallel data m is 9, the number of the PN code sequences R selected multiplexer MUX30 is 2, it is controlled that the serial data DS to be transferred is converted into parallel data by every 9 bit, components I is inverted or not according to MSB DPM-1. the next 6 bits to the MSB are input to the decoder DEC22 and the first control signal CTRL11 is generated, and PN code sequence passes through the two of multiplexers MUX30. Also the inversion and non-inversion of PN code sequence passed through the multiplexer MUX30 is controlled by generating the second control signal CTRL12, which is generated in a decoder DEC21 from the lowest 2 bits.

Here formula (12) is defined.

$$6 < \log_2({}_{16}C_2) < 7 \tag{12}$$

This is enough for expressing transmitting data of upper 6 bit by combining two PN code sequences of 16 chips. The control of inversion and non-inversion of each polarity of selected two PN code sequence is controlled by applying the lower two bit data to each PN code sequences.

In Fig. 17, the exemplary structure of the addition circuit ADD1 is shown. In Fig. 17, outputs from multiplexers MUX1 to MUXR are represented by the input voltages Vin31 to Vin3R which are integrated by a capacitive coupling CP3 consisted of capacitances C31 to C3R. An output of the capacitive coupling CP3 is input to an inverted amplifying circuit including three steps of MOS inverters of I31, I32 and I33. An output of the inverter I33 is fed back to an input of the inverter I31 through a feedback capacitance CF3.

The inverted amplifying circuit has enough high open loop gain and works as a calculation amplifier. Therefore, an output Vout3 shown in formula (13) is output from the inverter I33 with high linearity by forming a feedback system by the inverted amplifying circuit.

$$Vout3 = Vdd - \frac{\sum_{i=1}^{R} V3i \cdot C3i}{CF3} \tag{13}$$

Here formula (14) is defined.

$$C31 = C32 = ... = C3R = CF3/R \tag{14}$$

Therefore, formula (13) can be transformed into the formula (15).

$$Vout3 = Vdd - \frac{1}{R}\sum_{i=1}^{R} Vin3i \qquad\qquad (15)$$

The addition circuit ADD1 outputs voltage corresponding to the addition result from Vin31 to Vin3R. The output is transmitted from the transmitting portion after appropriately inverting, scaling and so on. When a digital processing is performed in the transmitting portion, a digital output can be generated by structuring the addition circuit ADD 1 by a well-known digital circuit.

The receiving portion in Fig.3 of the first embodiment to used as receiving portion of the form of the fourth embodiment.

In Fig. 3, a signal transmitted after QAM modulation is demodulated by a receiving portion not shown, and divided components I and Q are input to the receiving portion. The component I is input to the matched filter MF1, and the component Q is input to the matched filter MF2 and MF3.

A PN code sequence same as that of the component I in the transmitting portion is settled as a multiplier in the matched filter MF1. When an input signal of the component I and the multiplier of the matched filter MF1 coincide with each other, the matched filter MF1 generates a correlation peak. An output of the matched filter MF1 is input to peak detecting circuits TH1 and TH2. A plus (non-inverted) peak is detected by the peak detecting circuit TH1 and a minus (inverted) peak is detected by the peak detecting circuit TH2.

Outputs of peak detecting circuits TH1 and TH2 are input to an OR circuit OR41. The first trigger signal TG1 is generated when one of them detects a peak. Outputs of the peak detecting circuits TH1 and TH2 are input to the first judgment circuit J41. When the peak detecting circuit TH2 does not detect any peak and the peak detecting circuit TH1 detects a peak, the first judging circuit J41 generates the first judging signal Jo1 of low level. When TH1 does not detect a peak and TH2 detect a peak, the first judging circuit J41 generates the first judging signal Jo1 of high level.

The first judging signal Jo1 is a decoded data of the data DPm corresponding to the transmitting data DPm.

Data of the component Q is input to one of matched filters MF2 and MF3. The input of the component Q to one matched filter (MF2 or MF3) is stopped when the OR circuit OR41 outputs the first trigger signal TG1, and the input of the component Q to the other matched filter (MF3 or MF2) is started. In the matched filter to which the input of the components Q is stopped, the PN code sequence is circulated and a correlation peak signal is output at the timing of high correlation. In this case, as a plurality of PN code sequence is combined and transmitted from the transmitting portion, a plurality of correlation peak signals is obtained by the matched filter calculating correlation.

The clock CLKm for giving timing of the input of data is input to the multiplexer MUX10 . A clock CLKs generated from the clock CLKm is alternatively input to the matched filters MF2 or MF3.

It is performed by flip-flop FF41 and FF42 and the multiplexer MUX10. The clock CLKm is input to the multiplexer MUX10 and the clock CLKs is input to one of the matched filters MF2 and MF3 from the multiplexer MUX10 in which a control signal CTRL4 is used as a selection signal.

One of the matched filters MF2 and MF3 inputs the data of the component Q synchronous to the clock CLKs. One of MF2 and MF3 receives the component Q which to being input. The multiplexer MUX10 is switched by the control signal CTRL4, which is inverted by two stages of flip-flops FF41 and FF42 ever time when the trigger signal TG1 is input.

With respect to the flip-flop FF41, the trigger signal TG1 is input to the clock input (CK) terminal of it, and the inverted output ($\bar{Q}$) of the flip-flop FF42 is input to the data input (D) terminal of it. With respect to the flip-flop FF42, the inverted output ($\bar{Q}$) of the flip-flop FF41 is input to the data input (D) terminal of it, and the first trigger signal TG1 is input to a clock input (CK) terminal of it. Consequently, the output of the flip-flop FF42 repeats to be alternately high level and low level every time when the first trigger signal TG1 is input.

By the structure above, when the first trigger signal TG1 is output at a time, the multiplexer MUX10 is switched so that the matched filter MF3 receives the clock CLKs, assuming that the clock CLKs has been input to the matched filter MF2 until then. After that, the data input to the matched filter MF2 is held as it is, and the PN code sequence of the matched filter MF2 is circulated.

The selector SEL3 is switched to the side of matched filter MF2 on the timing that the first trigger signal TG1 is output. The switching control is performed by the controlling signal CTRL4. An output of the selector SEL4 is input to the peak detecting circuits TH3 and TH4, and the second trigger signal TG2 is output when one of the peak detecting circuits TH3 for detecting a plus peak and TH4 for detecting minus peak detects a peak. The second trigger signal TG 2 is output from an OR circuit OR42 to which outputs of peak detecting circuits TH3 and TH4 are input.

Outputs of the peak detecting circuits TH3 and TH4 are also input to the second judging circuit J42 which judges that a plus peak is detected when the peak detecting circuit TH3 detects a peak and the peak detecting circuit TH4 does not detect any peak. When the TH3 does not detects any peak and the TH4 detects a peak, the second judging circuit J42 judges that a minus peak is detected. In this case, the second judging signal Jo2 of the J42 is low level when a minus peak is detected, and it keeps high level when a plus peak is detected.

Fig. 18 shows the structure for obtaining a decoded serial data from the first trigger signal TG1, the first judging signal Jo1, the second trigger signal TG2, and the second judging signal Jo2.

In Fig. 18, the second trigger signal TG2 is input to a data input (D) terminal of a SREG1, and the clock CLKm is input to the clock input (CK) terminal of it. The first trigger signal TG1 is input to a reset input (RS) of a shift-register SREG1. When the first trigger signal RG1 is input, the shift-register SREG1 is reset, and the second trigger signal TG2 is successively written in the shift-register SREG1 at the timings that the second trigger signal TG2 is output synchronously to the clock CLKm.

As the second trigger signal TG2 is high level only when one of the peak detectors TH2 or TH3 detects a peak, data bits including R number of "1" per n bit are written to the shift-register SREG1.

An output of the shift-register SREG1 is input to an encoder E5. DPR+1 to DPm-1 are decoded by the inverse processing of the decoder DEC22 in Fig. 16 by the encoder E5.

As mentioned above, the data DPm is decoded as the first judging signal Jo1.

The second judging signal Jo2 is connected to a data input (D) terminal of the shift-register SREG2, and the second trigger signal TG2 is input to the clock input (CK) terminal. The first trigger signal TG1 is input to a rest input (RS) of the shift-register SREG2. That is, shift-register SREG2 is reset at the timing that the first trigger signal TG1 is input to the shift-register SREG2. Then, every time when the second trigger signal TG2 is input to the shift-register SREG2, outputs of the second judging signal Jo2 is successively written to the shift-register SREG2. Therefore, R bit string from DP1 to DPR of binary data is decoded by the shift-register SREG2. The lower R bits are decoded by it.

Outputs of the encoder E5 and the shift-register SREG2, and the first judging signal Jo1 is input to a shift-register SREG3 as a series of bit string. As the data is defined by a cycle of PN code sequence, that is, by every generation cycle of the first trigger signal TG1, the above data is input to the shift-register SREG3 on the timing of the first trigger signal TG1 by inputting the first trigger signal TG1 to a data load controlling terming (LOAD) of the shift-register SREG3.

As a data clock CLKd is always input to the shift-register SREG3, the transmission signals DP1 to DPm are serially output on every timing of the data clock CLKd from the shift-register SREG3. The data decoded from the transmission signals can be obtained by it.

Fig. 19 shows an example of a structures of the matched filters MF2 and MF3.

A control signal CTRL6 of the logical multiplication (AND logic) of the first trigger signal TG1 and an inverted signal of a control signal CTRL4 is input to a data load controlling input terminal (LOAD) of a down counter (shown by D_COUNTER), and the number of chips of one cycle n of the PN code sequence input to a data input terminal (Din) is loaded to the D_COUNTER. A binary output of the D_COUNTER (f bit) is input to an AND gate AND6 after all the logical sums are performed by an OR gate OR6, and the logical multiplication with the clock CLKm is performed.

Therefore, the AND6 is opened when the count value of the D_COUNTER is 1 or more, and the clock CLKm passes through AND6. The AND6 is opened only in the period that MF2 does not perform sampling and the D_COUNTER counts the n number of clocks CLKm.

The f bit is the number of bit corresponding to the number of chips n. It is the value when by the formula (16).

$$\log_2 n \leqq f < \log_2 n + 1 \tag{16}$$

The first trigger signal TG1 is generated by opening the AND6 during one cycle of the PN code sequence, and the received data stored in the shift-register REG6 from the completion of the sampling of the sampling and holding circuit SH is once circulated. The data held in the sampling and holding circuit SH is multiplied with the PN code sequence in REG6 whenever the shift-register REG6 is shifted. The multiplied data is added by an addition circuit ADD6 and a correlation output is generated.

When n number of clocks CLKm is input to D_COUNTER after the first trigger signal TG1 is output, the counted value of the D_COUNTER is 0, and AND6 is closed. It prepares for the next correlation calculation.

As the matched filter circulating PN code sequences cannot receive a component Q of new data, the component Q is input by stopping the supply of the clock CLKs and supplying the clock CLKs to other matched filters (MF2 or MF3).

Fig. 20 shows the timings of actions of the matched filters MF2 and MF3 which work as above.

As shown in the figure, the PN code sequence stored in the matched filter MF2 is circulated and a correlation is calculated when the first trigger signal TG1 is generated on the point of time t1. Consequently, correlation outputs are obtained on the points of time t2 and t3. the second trigger signal TG2 is generated by the correlation outputs. In this period, the received data during one cycle of the PN code sequence is input to the matched filer MF3. When the first trigger signal TG1 is generated again on the point of time t4, the PN code sequence in the matched filter MF3 is calculated and a correlation is calculated. Consequently, correlation output can be obtained on the point of times t5 and t6. The second trigger signal TG2 is generated by the correlation output.

The second trigger signal TG2 as shown in the figures can be obtained by repeating the actions above in the matched filters MF2 and MF3.

Taking Fig. 21 as an example, the above is described in more detail. In this example, it is assumed that one cycle of PN code sequence is 13 chips and R is 2, that is, the component Q is the sum of two of PN code sequences shifted in-phase.

The first trigger signal TG1 is generated by 13 chips, and the first judging signal Jo1 is generated so as to show the polarity of the peak synchronous to the first trigger signal TG1. Data DPm is generated as shown by the first judging signal Jo1.

As two offset PN code sequences are included in Q component, when the correlation of the component Q is calculated, two of the second trigger signal TG2 are generated in one cycle as shown. When the second trigger signal TG2 is input to the shift-register SREG1, it is "0010000001000" as shown. When the data stored in the shift-register SREG1 is input to the encoder E5, 6 bit of "000101" are assumed to be decoded, for example. The decoded data is serially output from the encoder E5.

When the second judging signal Jo2 which is generated synchronous to the second trigger signal TG2 is generated, data "10" is input to the shift-register SREG2, as shown.

An output of the encoder E5, an output of the shift-register SREG2, and the signal DPm are loaded to the shift-register SREG3, 9 bit of serial data DS 1 shifted and decoded according to the data clock CLKd is obtained. In this case, with respect to the 9 bit of serial data DS1, the first bit is the signal DPm, successive 6 bits are the output of the encoder E5, and the last 2 bit is the outputs of the shift-register SREG2.

As above, when the data is transmitted by the phase difference between the components I and Q, and inversion and non-inversion of the peak, the information rate Rn of n chip (1 chip time is "Tc") is

$$Rn=\log_2(2^{R+1} \cdot {}_nC_R)/n \cdot Tc \qquad (17)$$

In formula (17), R is the number of peaks of the component Q, that is, the number of the Pn code offset to transmitted which are shifted in-phase.

The information rate Rq in the case that each of I channel and Q channel transmits the 1 bit of information by conventional n chips is expressed in formula (2). The ratio of the two (information rate ratio, hereinafter) is as in formula (18).

$$Rn/Rq=\log_2(2^{R+1} \cdot {}_nC_R)/2 \qquad (18)$$

With respect to formula (17), the number of chips n and the information rate ratio Rn/Rq is shown in Fig. 22. The quantity of the information is improved several times as the conventional one. It means that the speed of communication is improved.

In the above embodiments, an information is transmitted and received under the condition that the number of peaks of the component Q is constant. It is possible to change R. In the embodiment of such a condition, an information can be transmitted and received by the similar structure of the circuit. This is the third embodiment which is described below.

For example, it is assumed that the number of chips n=16, the number of bits of one block to transmit m=10, $1 \leqq R$(the number of peaks of the component Q) $\leqq 2$, R=1 when the value of data block p is from "0" to "111111" (binary number), the inversion and non-inversion of the component I is defined by MSB of the data block, the inversion and non-inversion of a peaks defined by LSB of the data block, and the peak, and the location of the peak (16 ways) is defined by the rest 4 bit.

When p>"1111111" (that is from "0001000000" to "1111111111"), R=2, and the inversion and non-inversion of the component I is define by MSB of a data block, and the inversion and non-inversion of a peak is defined by lower 2 bit of the data block. The transmissible information Ifn under such a condition is expressed in formula (19).

$$Ifn=\log_2(2^3 \times {}_{16}C_2+2^2 \times {}_{16}C_1) \geqq 10 \qquad (19)$$

It is possible to transmit the 10 bits of information by one cycle of PN code sequences.

Figs 24 and 25 show the structures of decoder and encoder for realizing the third embodiment. In Fig. 24, the serial data DS to be transmitted is converted into m bit of parallel data block DP1 to DPm by serial/parallel converting circuit (S/P)8 synchronous to the data clock CLKd. 1 bit of DPm in the parallel data controls the inversion of the component I, and the rest (m-1) bit of data is converted into the first control signal CTRL81 and the second control signal CTRL82 by a decoder DEC8.

The first control signal CTRL 81 is used for opening and closing gate for passing through the PN code sequences performed offset similar to the first control signal CTRL11. The second control signal CTRL82 is used for controlling the polarity of polarity controlling portion PC1 to PCn similar to the second control signal CTRL12.

On the receiver side, as shown in Fig. 25, the second trigger signal TG2 is received synchronous to a clock CLKm in a shift register SREG4, and a judging signal Jo is received by the clock of the second trigger signal TG2 in a shift register SREG5 so as to generate a bit string to show the inversion and non-inversion of a peak, and the number of peak, and the location of peaks. The data in the shift-register SREG4 and the shift-register SREG5 is input to an encoder E9, and converted into the transmitted 1 block of parallel data DP1 to DPm. The parallel data DP1 to DPm is received by a shift-register SREG6 synchronous to the first trigger signal TG1, then is output as serial data DS synchronous to a data clock CLKd.

Generally, when the number of peaks is from 0 to R, the information rate is expressed by formula (20) assuming one chip time to be Tc.

$$Rq = \frac{\log_2 \left\{ \sum_{i=0}^{R} (2^{i+1} \times {}_n C_i) \right\}}{n \bullet Tc} \qquad (20)$$

Therefore, the information rate ratio Rn/Rq is as in formula (21).

$$\frac{Rn}{Rq} = \frac{\log_2 \left\{ \sum_{i=0}^{R} (2^{i+1} \times {}_n C_i) \right\}}{2} \qquad (21)$$

Fig. 23 shows the example of the information rate ratio Rn/Rq when the number of peaks R of the component Q is 4.

As mentioned above, a spread spectrum communication system according to the present invention expresses the data to be sent by the phase difference between the first and the second components. Therefore, it is possible to heighten the speed of communication by the conventional system.

Also, the present invention transfers the first PN code sequence itself as the first component, transmits an integrated signal of zero or more PN code sequences of the second PN code sequence with a phase differences as the second component, and defines an information for transmitting by the number of the second PN codes corresponding to a cycle of said first PN code sequence. Therefore, it is possible to increase the speed of communication by the conventional system.

Further, in the spread spectrum communication system with two components according to the present invention, the first component consists of the first PN code sequence and the second component consists of an addition of a plurality of PN code sequences shifted in-phase. An information is defined by shifted phases of the PN code sequences of the second component in comparison with the first component.

Therefore, it is possible to improve the capacity and speed of the data transmission.

**Claims**

1.  A spread spectrum communication system comprising a transmitter for transmitting a signal including a first PN code sequence (PN1),
    **characterised in that**
    the transmitter is arranged for transmitting a plurality of second PN code sequences (PNK), said second PN code sequences being shifted in phase from said first PN code sequence so that the information to be transmitted is defined by a combination of a number of said shifted second PN code sequences.

2. The spread spectrum communication system as claimed in claim 1, wherein said transmitter further comprises an inverting circuit (NOT2, NOT) for inverting said first PN code sequence so that an information is defined by whether said first PN code sequence is inverted or not.

3. The spread spectrum communication system as claimed in claim 2, wherein said transmitter is further arranged for adding (ADD1) said second PN code sequences, and wherein it is determined whether said first PN code sequence is inverted or not according to a predetermined bit of said information to be transmitted.

4. The spread spectrum communication system as claimed in one of claims 1 to 3, wherein said transmitter further comprises an inverting circuit (NOT1, PCR) for inverting said second PN code sequences so that an information is defined by whether said second PN code sequences are inverted or not.

5. The spread spectrum communication system as claimed in claim 4, wherein said transmitter (ADD1, PCR, DEC21, CTRL12) is further arranged for adding said second PN code sequences, and wherein it is determined whether said second PN code sequences are inverted or not according to a plurality of predetermined bits of said information to be transmitted.

6. The spread spectrum communication system as claimed in one of claims 1 to 5, wherein said first and second PN code sequences are the same.

7. The spread spectrum communication system as claimed in one of claims 1 to 6, further comprising a receiver for receiving said signal, said receiver including a matched filter (MF1, MF2, MF3) for obtaining a plurality of correlation peak signals for said signal including said first and second PN code sequences so as to detect said first and second PN code sequences and to extract said information.

8. The spread spectrum communication system as claimed in one of claims 1 to 7, wherein said transmitter is further arranged for transmitting said first and second PN code sequences as an in-phase (I) component and a quadrature (Q) component, respectively, of QPSK modulation.

9. The spread spectrum communication system as claimed in one of claims 1 to 8, wherein said transmitter is further arranged for transmitting said first and second PN code sequences through different channels of different carrier waves from each other.

10. The spread spectrum communication system as claimed in one of claims 1 to 8, wherein said first and second PN code sequences are orthogonal to each other and carried by the same carrier wave.

11. The spread spectrum communication system as claimed in one of claims 1 to 9, wherein each of said first and second PN code sequences are transmitted by carrier waves different from each other.

12. The spread spectrum communication system as claimed in claim 1, wherein said transmitter is further arranged for adding (ADD1) said second PN code sequences.

13. The spread spectrum communication system as claimed in one of claims 1 to 12, wherein said first and second PN code sequences are generated by single PN code generating means (REG1, MUX30, MUX1 ... MUXR, ADD1).

14. The spread spectrum communication system as claimed in one of claims 1 to 13, wherein the transmitter is arranged for multiplexing the first PN code sequence and the second PN code sequence, and applying QAM modulation.

**Patentansprüche**

1. Streuspektrum-Kommunikationssystem, das einen Sender zum Senden eines Signals umfasst, das eine erste PN-Codesequenz (PN1) enthält,
**dadurch gekennzeichnet, dass**:

EP 0 782 288 B1

der Sender so eingerichtet ist, dass er eine Vielzahl zweiter PN-Codesequenzen (PNK) sendet, wobei die zweiten PN-Codesequenzen gegenüber der ersten PN-Codesequenz phasenverschoben sind, so dass die zu sendenden Informationen durch eine Kombination einer Anzahl der verschobenen zweiten PN-Codesequenzen definiert werden.

2. Streuspektrum-Kommunikationssystem nach Anspruch 1, wobei der Sender des Weiteren eine Invertierschaltung (NOT2, NOT) umfasst, die die erste PN-Codesequenz so invertiert, dass Informationen **dadurch** definiert werden, ob die erste PN-Codesequenz invertiert ist oder nicht.

3. Streuspektrum-Kommunikationssystem nach Anspruch 2, wobei der Sender des Weiteren so eingerichtet ist, dass er die zweiten PN-Codesequenzen addiert (ADD1), und wobei entsprechend einem vorgegebenen Bit der zu sendenden Informationen bestimmt wird, ob die erste PN-Codesequenz invertiert ist oder nicht.

4. Streuspektrum-Kommunikationssystem nach einem der Ansprüche 1 bis 3, wobei der Sender des Weiteren eine Invertierschaltung (NOT1, PCR) umfasst, die die zweiten PN-Codesequenzen invertiert, so dass Informationen **dadurch** definiert werden, ob die zweiten PN-Codesequenzen invertiert sind oder nicht.

5. Streuspektrum-Kommunikationssystem nach Anspruch 4, wobei der Sender des Weiteren so eingerichtet ist, dass er die zweiten PN-Codesequenzen addiert (ADD1, PCR, DEC21, CTRL12), und wobei entsprechend einer Vielzahl vorgegebener Bits der zu senden Informationen bestimmt wird, ob die zweiten PN-Codesequenzen invertiert sind oder nicht.

6. Streuspektrum-Kommunikationssystem nach einem der Ansprüche 1 bis 5, wobei die erste und die zweiten PN-Codesequenzen die gleichen sind.

7. Streuspektrum-Kommunikationssystem nach einem der Ansprüche 1 bis 6, die des Weiteren einen Empfänger umfasst, der das Signal empfängt, wobei der Empfänger ein abgestimmtes Filter (MF1, MF2, MF3) enthält, um eine Vielzahl von Korrelations-Spitzensignalen für das Signal zu ermitteln, das die erste und die zweiten PN-Codesequenzen enthält, und die erste sowie die zweiten PN-Codesequenzen zu erfassen und die Informationen zu extrahieren.

8. Streuspektrum-Kommunikationssystem nach einem der Ansprüche 1 bis 7, wobei der Sender des Weiteren so eingerichtet ist, dass er die erste und die zweiten PN-Codesequenzen als eine phasengleiche (I) Komponente bzw. eine Quadratur (Q)-Komponente von QPSK-Modulation sendet.

9. Streuspektrum-Kommunikationssystem nach einem der Ansprüche 1 bis 8, wobei der Sender des Weiteren so eingerichtet ist, dass er die erste und die zweiten PN-Codesequenzen über verschiedene Kanäle voneinander verschiedener Trägerwellen sendet.

10. Streuspektrum-Kommunikationssystem nach einem der Ansprüche 1 bis 8, wobei die erste und die zweiten PN-Codesequenzen orthogonal zueinander sind und von der gleichen Trägerwelle getragen werden.

11. Streuspektrum-Kommunikationssystem nach einem der Ansprüche 1 bis 9, wobei die erste und die zweiten PN-Codesequenzen jeweils durch voneinander verschiedene Trägerwellen gesendet werden.

12. Streuspektrum-Kommunikationssystem nach Anspruch 1, wobei der Sender des Weiteren so eingerichtet ist, dass er die zweiten PN-Codesequenzen addiert (ADD1).

13. Streuspektrum-Kommunikationssystem nach einem der Ansprüche 1 bis 12, wobei die erste und die zweiten PN-Codesequenzen durch eine einzelne PN-Codeerzeugungseinrichtung (REG1, MUX30, MUX1 ... MUX R, ADD1) erzeugt werden.

14. Streuspektrum-Kommunikationssystem nach einem der Ansprüche 1 bis 13, wobei der Sender so eingerichtet ist, dass er die erste PN-Codesequenz und die zweite PN-Codesequenz multiplexiert und QAM-Modulation anwendet.

**Revendications**

1. Système de communication à spectre étalé comprenant un émetteur pour émettre un signal comportant une première séquence de code PN (PN1),

   **caractérisé en ce que**

   l'émetteur est adapté pour émettre une pluralité de secondes séquences de code PN (PNK), lesdites secondes séquences de code PN étant déphasées par rapport à ladite première séquence de code PN de sorte que l'information à émettre est définie par une combinaison d'un nombre desdites secondes séquences de code PN déphasées.

2. Système de communication à spectre étalé selon la revendication 1, dans lequel ledit émetteur comprend en outre un circuit inverseur (NOT2, NOT) pour inverser ladite première séquence de code PN de sorte qu'une information soit définie par le fait que ladite première séquence de code PN soit inversée ou non.

3. Système de communication à spectre étalé selon la revendication 2, dans lequel ledit émetteur est en outre adapté pour additionner (ADD1) lesdites secondes séquences de code PN, et dans lequel il est déterminé si ladite première séquence de code PN est inversée ou non selon un bit prédéterminé de ladite information à émettre.

4. Système de communication à spectre étalé selon l'une des revendications 1 à 3, dans lequel ledit émetteur comprend en outre un circuit inverseur (NOT1, PCR) pour inverser lesdites secondes séquences de code PN de sorte qu'une information soit définie par le fait que lesdites secondes séquences de code PN soient inversées ou non.

5. Système de communication à spectre étalé selon la revendication 4, dans lequel ledit émetteur (ADD1, PCR, DEC21, CTRL12) est en outre adapté pour additionner lesdites secondes séquences de code PN, et dans lequel il est déterminé si lesdites secondes séquences de code PN sont inversées ou non selon une pluralité de bits prédéterminés de ladite information à émettre.

6. Système de communication à spectre étalé selon l'une des revendications 1 à 5, dans lequel lesdites première et secondes séquences de code PN sont identiques.

7. Système de communication à spectre étalé selon l'une des revendications 1 à 6, comprenant en outre un récepteur pour recevoir ledit signal, ledit récepteur comportant un filtre adapté (MF1, MF2, MF3) pour obtenir une pluralité de signaux à corrélation de crête pour ledit signal comportant lesdites première et secondes séquences de code PN de manière à détecter lesdites première et secondes séquences de code PN et extraire ladite information.

8. Système de communication à spectre étalé selon l'une des revendications 1 à 7, dans lequel ledit émetteur est en outre adapté pour émettre lesdites première et secondes séquences de code PN comme respectivement une composante en phase (I) et une composante en quadrature (Q) d'une modulation QPSK.

9. Système de communication à spectre étalé selon l'une des revendications 1 à 8, dans lequel ledit émetteur est en outre adapté pour émettre lesdites première et secondes séquences de code PN à travers différents canaux d'ondes porteuses différentes les unes des autres.

10. Système de communication à spectre étalé selon l'une des revendications 1 à 8, dans lequel lesdites première et secondes de code PN sont orthogonales les unes par rapport aux autres et portées par la même onde porteuse.

11. Système de communication à spectre étalé selon l'une des revendications 1 à 9, dans lequel chacune desdites première et secondes séquences de code PN sont émises par des ondes porteuses différentes les unes des autres.

12. Système de communication à spectre étalé selon la revendication 1, dans lequel ledit émetteur est en outre adapté pour additionner (ADD1) lesdites secondes séquences de code PN.

13. Système de communication à spectre étalé selon l'une des revendications 1 à 12, dans lequel lesdites première et secondes séquences de code PN sont générées par un unique moyen de génération de code PN (REGI, MUX30, MUX1 ... MUXR, ADD1).

14. Système de communication à spectre étalé selon l'une des revendications 1 à 13, dans lequel l'émetteur est adapté pour multiplexer la première séquence de code PN et ladite seconde séquence de code PN, et appliquer une modulation QAM.

**Fig. 1**

**Fig. 2**

**Fig. 3**

Fig. 4

Fig. 5

Fg. 6

CLKm

TG 1

MF 2

PN(MF2)

MF 3

PN(MF3)

TG 2

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

### TABLE 1

Relationship of the Number of Chips, the Number of Peaks of Component Q
and the Information Ratio

| n | R | Rn/Rq |
|---|---|---|
| 10 | 2 | 4. 4 |
| 50 | 2 | 6. 8 |
| 128 | 2 | 8. 0 |
| 256 | 2 | 9. 2 |
| 512 | 2 | 10. 2 |
| 10 | 4 | 5. 4 |
| 50 | 4 | 10. 7 |
| 128 | 4 | 13. 6 |
| 256 | 4 | 15. 4 |
| 512 | 4 | 17. 5 |

Fig. 23

| n | R | Rn/Rq |
|---|---|---|
| 10 | 4 | 6 .6 |
| 50 | 4 | 11 .5 |
| 128 | 4 | 14 .3 |
| 256 | 4 | 16 .2 |
| 512 | 4 | 18 .3 |

Fig. 24

DPm

DPm-1

CRTL81

DS → S/P8    DEC8

DPR+1

CLKd

CTRL82

DPR

DP1

Fig. 25

TG1

RS                    RS

Jo → D                 TG2 → D
     CK  SREG5         CLKm  CK  SREG4
TG2

ENCODER                E9

DP1 DP2                 DPm

DPm-1

TG1 → LOAD
CLKd → CK    SREG6      → DS

Fig. 26

EP 0 782 288 B1